# EUROPEAN PATENT APPLICATION

(11) **EP 4 775 933 A1**
(43) Date of publication of application: **15.07.2026**
(21) Application number: 25855417.9
(22) Date of filing: 17.11.2025
(51) Int. Cl.: G01F 1/667

(54) **ULTRASONIC FLUID METERING ACCURACY IMPROVEMENT METHOD AND RELATED DEVICE THEREOF**

(30) Priority: 18.11.2024 CN 202411645268
(71) Applicant: Hangzhou Innover Technology Co., Ltd., Hangzhou, Zhejiang 310052 (CN)
(72) Inventor: FU, Jianhua, Hangzhou, Zhejiang 310052 (CN); SHI, Aiguo, Hangzhou, Zhejiang 310052 (CN); XU, Wei, Hangzhou, Zhejiang 310052 (CN); WANG, Lijun, Hangzhou, Zhejiang 310052 (CN); WANG, Yingjia, Hangzhou, Zhejiang 310052 (CN); SHI, Yang, Hangzhou, Zhejiang 310052 (CN)
(74) Representative: Berggren Oy
(86) International application number: PCT/CN2025/135554
(87) International publication number: WO 2026/103918

(57) **Abstract**

The present disclosure relates to a method for improving ultrasonic fluid metering accuracy, and a related device. The method includes: using an excitation wave sequence to excite a first ultrasonic transducer and to enable a second ultrasonic transducer to operate, acquiring a received digital signal corresponding to the excitation wave sequence, and calculating a signal-to-noise ratio of the received digital signal, wherein the excitation wave sequence is a combination of main waves and self-damping waves, and the signal-to-noise ratio is the ratio of a peak-to-peak value of a received signal region to a peak-to-peak value of a noise region; determining whether the signal-to-noise ratio is greater than a signal-to-noise ratio threshold, if not, adjusting occupancy times of high and low levels of the self-damping waves, and performing the excitation again according to the adjusted excitation wave sequence until an actual signal-to-noise ratio is greater than the signal-to-noise ratio threshold; and determining, as a target excitation wave sequence, a corresponding excitation wave sequence when the actual signal-to-noise ratio is greater than the signal-to-noise ratio threshold, and according to the target excitation wave sequence, exciting the ultrasonic transducer to operate, so as to perform a metering operation. The method significantly improves the metering accuracy without increasing the hardware cost.

## Description

The present disclosure claims the priority of Chinese Patent Application no. 202411645268.0, filed on November 18, 2024, the disclosure of which is incorporated herein by reference in its entirety as part of the present disclosure.

### TECHNICAL FIELD

The present disclosure relates to the technical field of ultrasonic instruments, and in particular, to a method for improving ultrasonic fluid metering accuracy, and a related device.

### BACKGROUND

Ultrasonic fluid metering apparatuses (such as ultrasonic gas meters, ultrasonic water meters, which are apparatuses for metering a fluid (a gas, liquid) by using ultrasonic waves) have been widely used in the fields of industry, energy, environmental protection and the like due to the advantages of high precision and non-contact measurement, etc. A time-difference method (a method for calculating the flow velocity of a fluid by measuring a difference in ultrasonic wave propagation times between downstream and upstream directions) is one of the most commonly used methods in the ultrasonic fluid metering apparatuses.

However, due to electromagnetic interference in the environment, power supply noise and internal noise of a transducer and an amplifier, deviations occur in a measured downstream time-of-flight T₁₂ and an upstream time-of-flight T₂₁, which affects the accuracy of zero crossing point detection of a received waveform, and thus the flow velocity or flow rate value output from the ultrasonic fluid metering apparatus is not zero in the absence of flow of the fluid, i.e. zero drift.

In a metering method of an ultrasonic fluid metering apparatus provided in the related art, in order to solve zero drift, an external device is generally additionally provided in a receiving circuit, for example, an external filter is additionally provided to reduce high-frequency noise. However, the solution increases the hardware cost of the ultrasonic fluid metering apparatus performing a metering operation. Moreover, since the model numbers of ultrasonic transducers used in the ultrasonic fluid metering apparatus are different, it is difficult to overcome residual ringing differences caused by parameter inconsistencies among the transducers merely by adding the external filter, resulting in relatively low metering accuracy.

In view of the described problems in the related art, an effective solution has not been proposed at present.

### SUMMARY

Embodiments of the present disclosure provide a method for improving ultrasonic fluid metering accuracy, and a related device, so as to at least solve the problems of a relatively high hardware cost, difficulty in applying to different types of ultrasonic transducers, and relatively low metering accuracy in a metering method of an ultrasonic fluid metering apparatus provided in the related art.

In order to solve the described problems, one aspect of the embodiments of the present disclosure provides a method for improving ultrasonic fluid metering accuracy, including:
using an excitation wave sequence to excite a first ultrasonic transducer and to enable a second ultrasonic transducer to operate, acquiring a received digital signal corresponding to the excitation wave sequence based on a preset sampling window, and calculating a signal-to-noise ratio of the received digital signal within the preset sampling window, wherein the excitation wave sequence is a combination of main waves and self-damping waves, the frequency of the main waves is consistent with the resonant frequency of the ultrasonic transducers, and the signal-to-noise ratio is the ratio of a peak-to-peak value of a received signal region to a peak-to-peak value of a noise region;
determining whether the signal-to-noise ratio is greater than a signal-to-noise ratio threshold, if not, adjusting occupancy times of high and low levels of the self-damping waves in the excitation wave sequence to obtain an adjusted excitation wave sequence, and performing the excitation again according to the adjusted excitation wave sequence until an actual signal-to-noise ratio is greater than the signal-to-noise ratio threshold; and
determining, as a target excitation wave sequence, a corresponding excitation wave sequence when the actual signal-to-noise ratio is greater than the signal-to-noise ratio threshold, and according to the target excitation wave sequence, exciting the first ultrasonic transducer and enabling the second ultrasonic transducer to operate, so as to perform a metering operation.

In some embodiments, the method further includes a step of generating the excitation wave sequence:
acquiring the resonant frequency of the ultrasonic transducers, using a value of the resonant frequency as a main wave frequency value corresponding to the main waves in the excitation wave sequence, and using a value of a non-resonant frequency as an initial frequency value of the self-damping waves; and
generating the main waves according to the main wave frequency value, a preset duty cycle of the main waves and a preset number of the main waves, generating the self-damping waves according to the initial frequency value corresponding to the self-damping waves, an initial duty cycle of the self-damping waves and a preset number of the self-damping waves, and then combining the main waves with the self-damping waves to generate the excitation wave sequence.

In some embodiments, the step of adjusting the occupancy times of the high and low levels of the self-damping waves in the excitation wave sequence to obtain the adjusted excitation wave sequence, and performing the excitation again according to the adjusted excitation wave sequence until an actual signal-to-noise ratio is greater than the signal-to-noise ratio threshold includes:
constructing a level occupancy time array corresponding to the self-damping waves, wherein numerical values in the level occupancy time array sequentially represent the occupancy times of the high and low levels in p self-damping waves, and p is the preset number of the self-damping waves; and
when the signal-to-noise ratio is not greater than the signal-to-noise ratio threshold, performing the following cyclic operations: determining a current numerical value to be adjusted from the level occupancy time array one by one; performing a plurality of numerical value adjustments on the current numerical value to be adjusted, calculating an actual signal-to-noise ratio corresponding to each numerical value adjustment, determining an adjustment value corresponding to a maximum signal-to-noise ratio among a plurality of actual signal-to-noise ratios, and using the adjustment value as a target value of the current numerical value to be adjusted; traversing all numerical values in the level occupancy time array; and ending the cyclic operations when the actual signal-to-noise ratio becomes greater than the signal-to-noise ratio threshold.

In some embodiments, the step of performing the plurality of numerical value adjustments on the current numerical value to be adjusted, calculating the actual signal-to-noise ratio corresponding to each numerical value adjustment, and determining the adjustment value corresponding to the maximum signal-to-noise ratio among the plurality of actual signal-to-noise ratios further includes:
for any adjustment on the current numerical value to be adjusted, performing a plurality of excitation operations to sample a plurality of groups of received digital signals, and calculating signal-to-noise ratio average values corresponding to the plurality of groups of received digital signals; and
taking, as the adjustment value, the maximum signal-to-noise ratio among a plurality of signal-to-noise ratio average values corresponding to the plurality of numerical value adjustments.

In some embodiments, a preset adjustment time is set, and the method further includes:
if the actual signal-to-noise ratio is greater than the signal-to-noise ratio threshold, or if the adjustment time exceeds the preset adjustment time, determining an excitation wave sequence including a current self-damping wave as the target excitation wave sequence.

In some embodiments, the self-damping waves include p fixed waves having an identical self-damping wave frequency, wherein for the p fixed waves, the p high levels thereof have the same occupancy time, and the p low levels thereof have the same occupancy time; and a frequency value of the self-damping waves lies outside an operating frequency value range of the ultrasonic transducers.

In some embodiments, the self-damping waves include p increasing waves whose self-damping wave frequencies increase progressively or p decreasing waves whose self-damping wave frequencies decrease progressively, wherein

In any increasing wave, high and low levels have the same occupancy time, and the occupancy times of high levels across the p increasing waves increase progressively; and

In any decreasing wave, high and low levels have the same occupancy time, and the occupancy times of high levels across the p decreasing waves decrease progressively.

In order to solve the described problems, one aspect of the embodiments of the present disclosure provides an ultrasonic fluid metering apparatus, including:
a signal-to-noise ratio determination module, configured to: use an excitation wave sequence to excite a first ultrasonic transducer and to enable a second ultrasonic transducer to operate, acquire a received digital signal corresponding to the excitation wave sequence based on a preset sampling window, and calculate a signal-to-noise ratio of the received digital signal within the preset sampling window, wherein the excitation wave sequence is a combination of main waves and self-damping waves, the frequency of the main waves is consistent with the resonant frequency of the ultrasonic transducers, and the signal-to-noise ratio is the ratio of a peak-to-peak value of a received signal region to a peak-to-peak value of a noise region;
an adjustment module, configured to determine whether the signal-to-noise ratio is greater than a signal-to-noise ratio threshold, if not, adjust occupancy times of high and low levels of the self-damping waves in the excitation wave sequence to obtain an adjusted excitation wave sequence, and perform the excitation again according to the adjusted excitation wave sequence until an actual signal-to-noise ratio is greater than the signal-to-noise ratio threshold; and
a metering module, configured to determine, as a target excitation wave sequence, a corresponding excitation wave sequence when the actual signal-to-noise ratio is greater than the signal-to-noise ratio threshold, and according to the target excitation wave sequence, excite the first ultrasonic transducer and enable the second ultrasonic transducer to operate, so as to perform a metering operation.

In order to solve the described problems, one aspect of the embodiments of the present disclosure provides an electronic device, including: a processor, and a memory for storing a program, wherein the program includes instructions, and the instructions, when executed by the processor, cause the processor to perform any of the described method for improving ultrasonic fluid metering accuracy.

In order to solve the described problems, one aspect of the embodiments of the present disclosure provides a non-transitory machine-readable medium having stored thereon computer instructions, wherein the computer instructions are configured to cause a computer to execute any of the described method for improving ultrasonic fluid metering accuracy.

The embodiments of the present disclosure have the beneficial effects as follows: by using the following technical means: using an excitation wave sequence to excite a first ultrasonic transducer and to enable a second ultrasonic transducer to operate, acquiring a received digital signal corresponding to the excitation wave sequence based on a preset sampling window, and calculating the signal-to-noise ratio of the received digital signal within the preset sampling window, wherein the excitation wave sequence is the combination of main waves and self-damping waves, the frequency of the main waves is consistent with the resonant frequency of the ultrasonic transducers, and the signal-to-noise ratio is the ratio of the peak-to-peak value of a received signal region to the peak-to-peak value of a noise region; determining whether the signal-to-noise ratio is greater than the signal-to-noise ratio threshold, if not, adjusting the occupancy times of the high and low levels of the self-damping waves in the excitation wave sequence to obtain an adjusted excitation wave sequence, and performing the excitation again according to the adjusted excitation wave sequence until an actual signal-to-noise ratio is greater than the signal-to-noise ratio threshold; and determining, as the target excitation wave sequence, a corresponding excitation wave sequence when the actual signal-to-noise ratio is greater than the signal-to-noise ratio threshold, and according to the target excitation wave sequence, exciting the first ultrasonic transducer and enabling the second ultrasonic transducer to operate, so as to perform a metering operation, it is possible to overcome the problems in the related art in which the hardware cost of the ultrasonic fluid metering apparatus executing the metering operation is increased due to the fact that high-frequency noise is reduced by additionally providing an external device, and the metering accuracy is relatively low due to the fact that since the model numbers of the ultrasonic transducers used in the ultrasonic fluid metering apparatus vary, merely adding external filters can hardly overcome residual ringing differences caused by parameter inconsistencies among the transducers. The ultrasonic transducer is excited by the excitation wave sequence including the main waves and the self-damping waves, and the parameters of the self-damping waves are adjusted according to the signal-to-noise ratio corresponding to the sampled signals, so as to determine the excitation wave sequence conforming to the current ultrasonic transducers, therefore the technical effects of significantly improving the metering accuracy without increasing any hardware cost, and overcoming residual ringing differences caused by parameter inconsistencies among different ultrasonic transducers to expand the applicable scenarios of the method are achieved.

The details of one or more embodiments of the present disclosure are set forth in the following drawings and descriptions, so that other features, objectives and advantages of the present disclosure are clearer and easier to understand.

### BRIEF DESCRIPTION OF THE DRAWINGS

To describe the technical solutions in the embodiments of the present disclosure or in the prior art more clearly, the drawings to be used in the description of the embodiments or the prior art will be briefly introduced below. Apparently, the drawings described below are merely a part, but not all, of the embodiments of the present disclosure. For those ordinary skilled in the art, other embodiments may also be obtained according to these drawings without creative efforts.
Fig. 1 is a schematic installation diagram of an ultrasonic transducer of an ultrasonic fluid metering apparatus in the related art.
Fig. 2 is a schematic diagram of a received signal waveform after the excitation of an ultrasonic transducer in the related art.
Fig. 3 is a schematic flowchart of a method for improving ultrasonic fluid metering accuracy according to an embodiment of the present disclosure.
Fig. 4 is a schematic diagram of a signal waveform obtained by exciting an ultrasonic transducer only on the basis of main waves, according to an embodiment of the present disclosure.
Fig. 5 is a schematic diagram of a signal waveform acquired during a self-damping wave adjustment process, according to an embodiment of the present disclosure.
Fig. 6 is a schematic diagram of a signal waveform obtained by exciting an ultrasonic transducer on the basis of a target excitation wave sequence, according to an embodiment of the present disclosure.
Fig. 7 is a schematic block diagram of an ultrasonic fluid metering apparatus according to an embodiment of the present disclosure.
Fig. 8 is a schematic structural diagram of an electronic device according to an embodiment of the present disclosure.

### DETAILED DESCRIPTION OF THE EMBODIMENTS

Embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein, but rather these embodiments are provided for a more thorough and complete understanding of the present disclosure. It should be understood that the drawings and embodiments of the present disclosure are merely for exemplary purposes, and are not intended to limit the protection scope of the present disclosure.

A time-difference method, which is a method for calculating the flow velocity of a fluid by measuring a difference in ultrasonic wave propagation times between downstream and upstream directions, is one of the most commonly used methods in ultrasonic fluid metering.

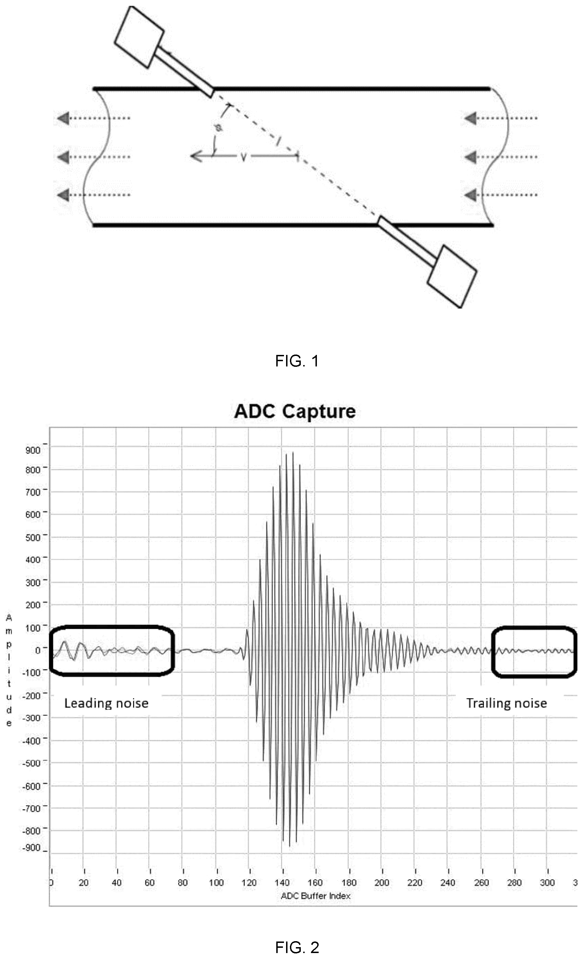

At present, measurement chips of the time-difference method on the market utilize two principles: 1. a zero-crossing timing method: as shown in Fig. 1, ultrasonic transducers are respectively arranged on two sides of a fluid pipeline, a fluid flows through the pipeline at a velocity v, the distance between the two ultrasonic transducers is I, an included angle between a line connecting the two ultrasonic transducers and a horizontal direction of the pipeline is θ. By timing zero-crossing points of a received ultrasonic waveform, the hardware directly provides a downstream time-of-flight T₁₂ and an upstream time-of-flight T₂₁, from which the velocity V of the fluid may be calculated. However, the method is sensitive to noise, is susceptible to environmental interference, and is prone to zero drift in the case of a low flow rate or a zero flow rate. 2. An AD (Analog-to-Digital, which converts an analog signal into a digital signal) sampling software timing method: performing AD conversion on a received ultrasonic waveform to convert the analog signal into a digital signal, and then calculating time-of-flight and a time difference by using a software algorithm. The drawbacks of the method are relatively high computational complexity, the need for a more capable processor, as well as the presence of zero drift in the case of low flow rate or zero flow rate. Zero drift adversely affects the metering accuracy of the ultrasonic fluid metering apparatus, with a more significant effect on the accuracy in small flow-rate measurement.

The ultrasonic transducer is a core component of the ultrasonic fluid metering apparatus, and is responsible for converting an electrical signal into an ultrasonic signal or converting the ultrasonic signal into an electrical signal. Before performing a metering operation, properly exciting the ultrasonic transducer can ensure the quality and stability of the ultrasonic signal, thereby improving the measurement accuracy. However, when designing receiving a excitation sequence waveform, the usage conditions of an ultrasonic gas meter must be taken into account so that, when the main signal falls within a reception window, the received waveform sequence is theoretically free of any signals immediately before and after the received main signal. In fact, since an ultrasonic transmitting transducer and an ultrasonic receiving transducer share a common ground, residual ringing of the ultrasonic transmitting transducer after excitation interferes with a receiving circuit through the ground. This results in a relatively large decaying signal appearing before a received signal region. After the ultrasonic receiving transducer receives the signal, it rings inherently, so there is also a decaying signal after the received signal region. As shown in Fig. 2, the received signal contains leading noise and trailing noise, which adversely affect the metering accuracy.

In the related art, external hardware is generally additionally provided in the ultrasonic fluid metering apparatus, for example, a low-pass filter, a high-pass filter or a band-pass filter is used to remove unnecessary noise; an analog filter is added before an ADC module to reduce high-frequency noise; an adaptive filter is used to dynamically adjust filter parameters, so as to improve the signal-to-noise ratio; and a Kalman filter is used to perform state estimation, so as to reduce noise. However, the described solution increases the hardware cost of the ultrasonic fluid metering apparatus performing a metering operation, and moreover, since the model numbers of ultrasonic transducers used in the ultrasonic fluid metering apparatus vary, it is difficult to overcome residual ringing differences caused by parameter inconsistencies among the transducers merely by adding an external filter, resulting in relatively low metering accuracy.

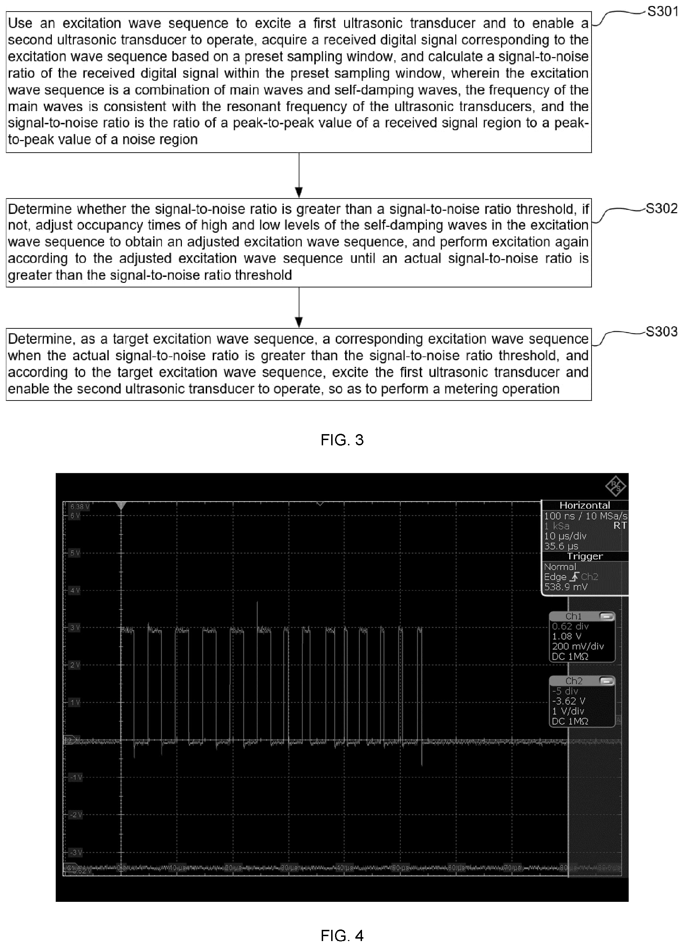

In order to solve the described problems, the embodiments of the present disclosure provide a method for improving ultrasonic fluid metering accuracy. As shown in Fig. 3, the method for improving ultrasonic fluid metering accuracy mainly includes:
Step S301: using an excitation wave sequence to excite a first ultrasonic transducer and to enable a second ultrasonic transducer to operate, acquiring a received digital signal corresponding to the excitation wave sequence based on a preset sampling window, and calculating a signal-to-noise ratio of the received digital signal within the preset sampling window, wherein the excitation wave sequence is a combination of main waves and self-damping waves, the frequency of the main waves is consistent with the resonant frequency of the ultrasonic transducers, and the signal-to-noise ratio is the ratio of a peak-to-peak value of a received signal region to a peak-to-peak value of a noise region.

The excited first ultrasonic transducer provided in the embodiments of the present disclosure is used for performing ultrasonic transmission; it may be either an ultrasonic transmitting transducer or an ultrasonic receiving transducer. The enabled second ultrasonic transducer is used for performing ultrasonic reception. It can be understood that when the first ultrasonic transducer is an ultrasonic transmitting transducer, the second ultrasonic transducer is an ultrasonic receiving transducer; and when the first ultrasonic transducer is an ultrasonic receiving transducer, the second ultrasonic transducer is an ultrasonic transmitting transducer.

The excitation wave sequence provided in the embodiments of the present disclosure is formed by combining the main waves with the self-damping waves. Specifically, the main waves are used for generating a stable measurement waveform, and the resonant frequency of the ultrasonic transducers is selected as the frequency of the main waves, so that the maximum energy transmission and optimal signal intensity can be ensured, and signal distortion is reduced. The self-damping waves are used to change the natural ringing state of the transducer and to drive the oscillation frequency of the transducer into a non-resonant frequency band, so that the natural ringing of the transducer after excitation decays rapidly, thereby reducing the effect of residual ringing on measurement results.

Through the described configurations, the embodiments of the present disclosure innovatively provide a solution for performing excitation by the excitation wave sequence including the main waves and the self-damping waves. The excitation wave sequence not only ensures the generation of a stable measurement waveform, but also helps to reduce the effect of residual ringing of the ultrasonic transducer on metering results. However, in low flow-rate measurement, minor noise and natural ringing significantly affect the measurement results. Therefore, in order to improve the metering accuracy, in the embodiments of the present disclosure, the received digital signal corresponding to the excitation wave sequence is further sampled, and the ratio of the peak-to-peak value of the received signal region to the peak-to-peak value of the noise region, that is, the signal-to-noise ratio (SNR), is calculated. The signal-to-noise ratio is then used to optimize and adjust parameters of the self-damping waves, effectively reducing the natural ringing interference of the excited transducer, thereby further improving the metering accuracy of the ultrasonic fluid metering apparatus. In this way, the method can overcome residual ringing differences caused by parameter inconsistencies among different ultrasonic transducers, thereby expanding the applicable scenarios of the method.

It should be noted that, when the second ultrasonic transducer operates, after receiving an ultrasonic signal transmitted by the first ultrasonic transducer, the second ultrasonic transducer converts the ultrasonic signal into an electrical signal. When the received digital signal corresponding to the excitation wave sequence is acquired based on the preset sampling window, a sampling operation needs to be performed on the electrical signal at first, and then an AD (analog-to-digital conversion) process needs to be performed on the sampled electrical signal to finally obtain the corresponding received digital signal.

Given the propagation time of ultrasonic waves in the fluid and a response time of the transducer, an appropriate time window (i.e., the preset sampling window) needs to be selected to ensure that a main ultrasonic signal can be received within this time window. The received signal region in the received digital signal may be determined by using a peak detection method, that is, within the preset sampling window, the received signal region is determined by detecting a peak of the signal. **In** general, the received signal region includes the signal's maximum-amplitude point and several sampling points in the vicinity.

Within a period of time before the ultrasonic signal arrives at the receiving transducer, the collected signal is mainly background noise; and within a period of time after the ultrasonic signal arrives at the receiving transducer, the signal intensity gradually attenuates, and this portion of the signal may also be treated as noise. Therefore, the received digital signal within the preset sampling window may be divided into the received signal region (including the main ultrasonic signal) and the noise region, so as to calculate the signal-to-noise ratio corresponding to the received digital signal.

According to a specific implementation of the embodiments of the present disclosure, a 300 µs time window (i.e., a time window corresponding to the preset sampling window) is selected, and if a moment at which the excitation wave sequence starts to be transmitted is taken as a 0 µs time point, and a delay time TL is applied to wait for the ultrasonic signal to propagate in the pipeline, then a specific sampling window time interval corresponding to the preset sampling window is [TL+0 µs, TL+300 µs]. If the peak value of the signal is detected between TL+120 µs and TL+240 µs, [TL+120 µs, TL+240 µs] may be determined as the received signal region; and then [TL+0 µs, TL+120 µs] and [TL+240 µs, TL+300 µs] are used as the noise region.

According to another specific implementation, the received signal region may also be determined on the basis of a maximum peak value and a time interval of a preset received signal region, for example, if the maximum peak value is detected at TL+150 µs, "TL+150 µs" ± 50 µs may be used to obtain the received signal region as [TL+100 µs, TL+200 µs]. It should be noted that the described numerical values are only examples, and are not intended to limit the present disclosure.

According to the embodiments of the present disclosure, the excitation wave sequence may be generated by an excitation signal generation module disposed in the ultrasonic fluid metering apparatus, and the excitation signal generation module is configured to generate a specific electrical signal (a waveform having a certain frequency and amplitude, such as a sine wave, or a square wave), wherein the frequency of the main waves is set to be consistent with the resonant frequency of the ultrasonic transducers, thereby ensuring that the transducers can efficiently convert the electrical signal into an ultrasonic signal. Further, an excitation signal may be subjected to amplification processing by a driving circuit located in the ultrasonic fluid metering apparatus, and then transmitted to the first ultrasonic transducer, thereby providing sufficient power to drive the transducer. The first ultrasonic transducer may convert the received electrical signal into an ultrasonic signal, so that the transducer is in an optimal operating state to generate a stable ultrasonic signal. By means of excitation, initial noise of the transducer may be reduced or eliminated to improve the signal-to-noise ratio; and the excitation process may help the transducer quickly enter a stable operating state, thereby ensuring that the signal intensity and waveform during each measurement are consistent. The ultrasonic signal propagates through the fluid from the first ultrasonic transducer to the second ultrasonic transducer, and the flow velocity of the fluid affects the propagation time of the ultrasonic signal. Then, the second ultrasonic transducer converts the received ultrasonic signal into an electrical signal, and the received electrical signal is amplified by an internal amplification circuit, thereby improving the signal-to-noise ratio, the amplified electrical signal is then sampled by an ADC (an analog-to-digital converter) inside the ultrasonic fluid metering apparatus, to convert an analog signal into a digital signal. The sampled digital signal is processed by an internal signal processing module, so as to calculate the signal-to-noise ratio of the signal. Then, based on the quality of the signal-to-noise ratio, a control module determines whether it is necessary to adjust parameters of the excitation wave, wherein the parameters mainly refer to occupancy times of high and low levels in the self-damping waves; if it is necessary to adjust the parameters of the excitation wave, the control module updates a parameter configuration of the excitation signal generation module to generate a new excitation signal; and the described excitation and collection processes are repeated until the signal-to-noise ratio reaches an expected level (satisfying a preset adjustment time or a signal-to-noise ratio threshold).

In some embodiments, the method further includes a step of generating the excitation wave sequence: acquiring the resonant frequency of the ultrasonic transducers, using a value of the resonant frequency as a main wave frequency value corresponding to the main waves in the excitation wave sequence, and using a value of a non-resonant frequency as an initial frequency value of the self-damping waves; and generating the main waves according to the main wave frequency value, a preset duty cycle of the main waves and a preset number of the main waves, generating the self-damping waves according to the initial frequency value of the self-damping waves, an initial duty cycle of the self-damping waves and a preset number of the self-damping waves, and then combining the main waves with the self-damping waves to generate the excitation wave sequence.

On the basis of the described configurations, it can be determined from the described analysis that the frequency of the main waves is set to be consistent with the resonant frequency of the ultrasonic transducers, which helps to ensure the maximum transmission efficiency and intensity of the signal, and meanwhile, by means of the preset duty cycle of the main waves and the preset number of the main waves, stable main waves can be generated to further reduce signal distortion.

According to a specific implementation of the embodiments of the present disclosure, the preset duty cycle of the main waves may be selected as a duty cycle of 50%, so as to ensure the symmetry and stability of the waveform, thereby effectively reducing signal distortion. The selection of the preset number of the main waves depends on the required signal stability and measurement accuracy. In general, a greater number of the main waves may provide a more stable signal, but increases the measurement time. An appropriate number of the main waves may be determined by experiments, and may also be determined in combination with the stability of the required signal and a sampling time period of the waveform corresponding to the sampling window. The initial frequency of the self-damping waves is selected in a non-resonant frequency band, so that the natural ringing of the transducer can be effectively reduced, and the effect of residual ringing on the measurement result can be reduced. The initial duty cycle of the self-damping waves corresponds to the occupancy times of the high and low levels. In the embodiments of the present disclosure, the occupancy times of the high and low levels are set to be adjustable, and the shape of the self-damping wave may be changed by adjusting the occupancy times of the high and low levels, so as to change the natural ringing state of the transducer. The selection of the preset number of the self-damping waves depends on the required damping effect, and in general, a greater number of the self-damping waves may provide a better damping effect, but increases the measurement time.

In the initial excitation wave sequence provided in the embodiments of the present disclosure, in an initial state, the frequency of the main waves is set to be the resonant frequency of the ultrasonic transducers, the number m and the frequency of the main waves are set to be fixed, and the parameters of the self-damping waves may be set to initial default values. The parameters of the self-damping waves may be adjusted subsequently in combination with the signal-to-noise ratio, so as to determine target parameters of the self-damping waves adapted to the type of the current ultrasonic transducer.

In some embodiments, the self-damping waves include p fixed waves having an identical self-damping wave frequency, wherein for the p fixed waves, the p high levels thereof have the same occupancy time, and the p low levels thereof have the same occupancy time; and a frequency value of the self-damping wave lies outside an operating frequency value range of the ultrasonic transducers.

According to a specific embodiment of the present disclosure, taking a level occupancy time array T[2p] corresponding to the self-damping waves as an example, p is a number of the self-damping waves P, numerical values in the array T[2p] sequentially correspond to the occupancy times of high and low levels of p waves in the self-damping waves, resulting in a total of 2×p numerical values. The sequence of the self-damping waves P including the p fixed waves having the consistent self-damping wave frequency is as follows: the sequence of T[2p] is {h, I, h, I, h, I...}, wherein the high level occupancy times for all waves of T[2p] are the same, and the low level occupancy times are also the same. Further, the frequency of the self-damping waves may be set to a fixed frequency value other than the operating frequency of the ultrasonic transducer, and the occupancy times of the high and low levels may be calculated according to the fixed frequency value. Based on the self-damping waves including a plurality of fixed waves, since the frequency of the self-damping waves is different from the operating frequency of the ultrasonic transducer, the natural ringing state of the ultrasonic transducer may also be changed, and the oscillation frequency of the transducer is guided to fall into the non-resonant frequency band, so that the natural ringing of the ultrasonic transducer after excitation decays rapidly, and thus the effect of the residual ringing on the measurement result is reduced.

In some embodiments, the self-damping waves include p increasing waves whose self-damping wave frequencies increase progressively or p decreasing waves whose self-damping wave frequencies decrease progressively, wherein in any increasing wave, high and low levels have the same occupancy time, and the occupancy times of high levels across the p increasing waves increase progressively; and in any decreasing wave, high and low levels have the same occupancy time, and the occupancy times of high levels across the p decreasing waves decrease progressively.

According to a specific embodiment of the present disclosure, a high and low level occupancy time array corresponding to the self-damping waves including the p increasing waves having the increasing self-damping wave frequencies or the p decreasing waves having the decreasing self-damping wave frequencies may be represented as: the array T[2p] is:
{x, x, x+c, x+c, x+2c, x+2c...}, where c is {+1, -1, +2,- 2...}

Since the frequencies of the self-damping waves are increasing or decreasing, the self-damping waves are necessarily away from the operating frequency corresponding to the ultrasonic transducers, therefore the natural ringing state of the transducer may also be changed, and the oscillation frequency of the transducer is guided to fall into the non-resonant frequency band, so that the natural ringing of the transducer after excitation decays rapidly, thereby reducing the effect of the residual ringing on the measurement result.

It can be understood that, since the initial state of the self-damping waves in the excitation wave sequence mentioned in step S301 is not defined, and the subsequent adjustment operation is also performed with the signal-to-noise ratio as a reference, the self-damping waves may be understood as an irregular sequence. The self-damping waves including the plurality of fixed waves, the plurality of increasing waves or the plurality of decreasing waves may be understood as a regular sequence, that is, the self-damping waves in the excitation wave sequence provided in the embodiments of the present disclosure may be an irregular sequence and may also be a regular sequence, both sequences may achieve the effects of reducing the noise interference and improve the metering accuracy, and in specific applications, different types of self-damping waves may be selected according to actual working conditions.

Step S302: determining whether the signal-to-noise ratio is greater than a signal-to-noise ratio threshold, if not, adjusting occupancy times of high and low levels of the self-damping waves in the excitation wave sequence to obtain an adjusted excitation wave sequence, and performing the excitation again according to the adjusted excitation wave sequence until an actual signal-to-noise ratio is greater than the signal-to-noise ratio threshold.

The signal-to-noise ratio is used as an optimization and adjustment basis of the self-damping waves in the excitation wave sequence, that is, the occupancy times of the high and low levels in the self-damping waves are dynamically adjusted according to changes in the signal-to-noise ratio (SNR), so as to gradually optimize the measurement result. Specifically, by dynamically adjusting the occupancy times of the high and low levels in the self-damping waves, the natural ringing of the ultrasonic transducer may be effectively reduced, thereby reducing residual ringing and background noise. The optimized self-damping waves may better guide the oscillation frequency of the transducer to fall into the non-resonant frequency band, thereby increasing the peak value of the received signal. Moreover, by dynamically adjusting the parameters of the self-damping waves, adaptive optimization may be achieved, and the parameters of the self-damping waves may be dynamically adjusted under different transducers and environmental conditions, so as to achieve an optimal signal-to-noise ratio. The method exhibits good adaptability to the parameter inconsistencies among the transducers and environmental changes, enabling it to effectively handle various complex working conditions.

In addition, the method provided in the embodiments of the present disclosure is mainly optimized through a software algorithm without incurring additional hardware costs, and may also be easily integrated into an existing ultrasonic fluid metering system, thereby improving the overall performance of the system.

In some embodiments, the step of adjusting the occupancy times of the high and low levels of the self-damping waves in the excitation wave sequence to obtain the adjusted excitation wave sequence, and performing the excitation again according to the adjusted excitation wave sequence until the actual signal-to-noise ratio is greater than the signal-to-noise ratio threshold includes: constructing a level occupancy time array corresponding to the self-damping waves, wherein numerical values in the level occupancy time array sequentially represent the occupancy times of the high and low levels in p self-damping waves, and p is the preset number of the self-damping waves; and when the signal-to-noise ratio is not greater than the signal-to-noise ratio threshold, performing the following cyclic operations: determining a current numerical value to be adjusted from the level occupancy time array one by one; performing a plurality of numerical value adjustments on the current numerical value to be adjusted, calculating an actual signal-to-noise ratio corresponding to each numerical value adjustment, determining an adjustment value corresponding to a maximum signal-to-noise ratio among a plurality of actual signal-to-noise ratios, and using the adjustment value as a target value of the current numerical value to be adjusted; traversing all numerical values in the level occupancy time array; and ending the cyclic operations when the actual signal-to-noise ratio becomes greater than the signal-to-noise ratio threshold.

The described steps provide a specific implementation of optimizing the parameters in the self-damping waves based on the signal-to-noise ratio. How to construct the level occupancy time array and adjust the numerical values in the array one by one when the signal-to-noise ratio is not greater than the signal-to-noise ratio threshold, until the actual signal-to-noise ratio is greater than the signal-to-noise ratio threshold is described in detail.

Through the described configurations, the level occupancy time array is constructed, the numerical values in the level occupancy time array sequentially represent the occupancy times of the high and low levels in the p self-damping waves, and then the occupancy times of the high and low levels of the self-damping waves are dynamically adjusted one by one, so that the natural ringing of the transducer can be effectively reduced, thereby reducing residual ringing and background noise. This is particularly effective in small flow-rate measurements, where the measurement accuracy is significantly improved, and zero drift is reduced. Moreover, the parameters of the self-damping waves are adaptively adjusted to adapt to different transducers and environmental conditions without incurring additional hardware costs.

In some embodiments, the step of performing the plurality of numerical value adjustments on the current numerical value to be adjusted, calculating the actual signal-to-noise ratio corresponding to each numerical value adjustment, and determining the adjustment value corresponding to the maximum signal-to-noise ratio among the plurality of actual signal-to-noise ratios further includes: for any adjustment on the current numerical value to be adjusted, performing a plurality of excitation operations to sample a plurality of groups of received digital signals, and calculating signal-to-noise ratio average values corresponding to the plurality of groups of received digital signals; and taking, as the adjustment value, the maximum signal-to-noise ratio among the plurality of signal-to-noise ratio average values corresponding to the plurality of numerical value adjustments.

Based on the described configurations, through a plurality of excitation operations, random errors in a single measurement can be reduced, and the stability of the signal-to-noise ratio can be improved; and by calculating the signal-to-noise ratio average values corresponding to the plurality of groups of received digital signals, the effect of the current adjustment value can be reflected more accurately. Specifically, by performing the plurality of numerical value adjustments and determining the maximum signal-to-noise ratio among the plurality of actual signal-to-noise ratio average values, an optimal adjustment value can be accurately identified. Moreover, the process of performing the plurality of numerical value adjustments and calculating the signal-to-noise ratio average values can help avoid getting trapped in a local optimum, thereby further ensuring that the adjustment value identified is a global optimum.

In some embodiments, a preset adjustment time is set, and the method further includes: if the actual signal-to-noise ratio is greater than the signal-to-noise ratio threshold, or if the adjustment time exceeds the preset adjustment time, determining an excitation wave sequence including a current self-damping wave as the target excitation wave sequence, wherein the preset adjustment time provided in the embodiments of the present disclosure is a preset adjustment time, which is used for limiting the time of an optimization process.

In the method for improving ultrasonic fluid metering accuracy, the signal-to-noise ratio (SNR) is an important indicator for assessing the measurement accuracy during the optimization and adjustment of the self-damping waves. By dynamically adjusting the parameters of the self-damping waves, the signal-to-noise ratio can be effectively increased, thereby improving the accuracy and reliability of the measurement. Moreover, setting the preset adjustment time can prevent the optimization process from continuing indefinitely, ensuring it is completed within a finite time period; and by imposing this time limit, computing resources can be allocated rationally, thereby avoiding resource waste caused by prolonged optimization.

According to a specific implementation of the embodiments of the present disclosure, a method for optimizing and adjusting self-damping waves P is provided, and the specific steps are as follows:
(1) constructing a level occupancy time array T[2p] corresponding to the self-damping waves, where p is a number of the self-damping waves P, numerical values in the array T[2p] sequentially correspond to occupancy times of high and low levels of p waves among the self-damping waves, resulting in a total of 2×p numerical values. During each of the adjustments, only one numerical value in the array T[2p] is adjusted, excitation and the calculation of the signal-to-noise ratio (SNR) are performed for n times (the sampling of a digital signal is performed during each time of excitation, and the corresponding signal-to-noise ratio is calculated), and an average value of n SNRs corresponding to each numerical value adjustment is calculated to obtain a signal-to-noise ratio average value snr_avg (through a plurality of excitation operations, random errors in a single measurement may be reduced, and the stability of the signal-to-noise ratio can be improved; and by calculating signal-to-noise ratio average values corresponding to a plurality of groups of digital signals, the effect of the current adjustment value can be reflected more accurately).
(2) changing the numerical value at the current position in the array T[2p] one by one. Calculating the snr_avg according to the steps in (1), and taking an adjustment value corresponding to a maximum value among the plurality of snr_avgs which correspond to the numerical value at the current position, as the new value of the adjusted numerical value in the current array T[2p].
(3) Cyclically adjusting all numerical values in the array T[2p] according to the described steps.
(4) repeating the steps (1)-(3) above to continuously update the maximum snr_avg and all numerical values in T[2p].
(5) exiting the cycle when a preset adjustment time has elapsed, or when the maximum snr_avg is greater than a signal-to-noise ratio threshold. At this time, the numerical values in the array T[2p] (i.e., the occupancy times of the high and low levels of the p self-damping waves) achieve an optimal effect of self-damping.

Step S303: determining, as a target excitation wave sequence, a corresponding excitation wave sequence when the actual signal-to-noise ratio is greater than the signal-to-noise ratio threshold, and according to the target excitation wave sequence, exciting the first ultrasonic transducer and enabling the second ultrasonic transducer to operate, so as to perform a metering operation.

The optimized self-damping waves included in the target excitation wave sequence may effectively reduce the natural ringing of the transducer, thereby reducing residual ringing and background noise, and improving the definition of the signal. A corresponding excitation wave sequence when the actual signal-to-noise ratio is greater than the signal-to-noise ratio threshold is determined as the target excitation wave sequence ensures that the excitation wave sequence used during the execution of the metering operation is optimal, thereby improving the reliability of the measurement; and by optimizing the signal-to-noise ratio, random errors and system errors in the measurement are reduced, thereby improving the accuracy of the measurement result.

The target excitation wave sequence is used to excite the first ultrasonic transducer and enable the second ultrasonic transducer to operate (in the ultrasonic fluid metering apparatus, a pair of transducers may operate as mutual transceivers, that is, one transducer serves as a transmitter and the other transducer serves as a receiver at a certain moment, and the roles of the two transducers are interchanged at another moment). Next, the propagation time of ultrasonic waves in the fluid is calculated; specific methods include zero-crossing detection and correlation analysis. The flow velocity and the flow rate of the fluid may be calculated according to a difference value ΔT between a downstream propagation time T₁₂ and an upstream propagation time T₂₁.

The ultrasonic fluid metering apparatus often encounters zero drift when measuring with a small flow rate or a zero flow rate, which is mainly caused by factors such as noise, signal distortion, hardware drift, mechanical vibration and variations in signal intensity. In order to solve these problems, the present disclosure designs a novel algorithm for improving ultrasonic fluid metering accuracy, in which the signal-to-noise ratio (SNR) of the current waveform is obtained by processing collected data, and the occupancy times of high and low levels of the self-damping waves in the excitation wave sequence are changed for repeated measurements, so as to finally achieve the effects of reducing noise and improving the small flow-rate measurement accuracy. It should be noted that the algorithm for improving metering accuracy may be directly run on a microcontroller unit (MCU, also referred to as a single chip microcomputer) in the ultrasonic fluid metering apparatus, or it may be run in a computer and remotely upgraded onto a single chip microcomputer for execution.

The described method for improving ultrasonic fluid metering accuracy provided in the embodiments of the present disclosure, adopts the following technical means: using the excitation wave sequence to excite the first ultrasonic transducer and to enable the second ultrasonic transducer to operate, acquiring the received digital signal corresponding to the excitation wave sequence based on the preset sampling window, and calculating the signal-to-noise ratio of the received digital signal within the preset sampling window, wherein the excitation wave sequence is the combination of the main waves and the self-damping waves, the frequency of the main waves is consistent with the resonant frequency of the ultrasonic transducers, and the signal-to-noise ratio is the ratio of the peak-to-peak value of the received signal region to the peak-to-peak value of the noise region; determining whether the signal-to-noise ratio is greater than the signal-to-noise ratio threshold, if not, adjusting the occupancy times of the high and low levels of the self-damping waves in the excitation wave sequence to obtain the adjusted excitation wave sequence, and performing the excitation again according to the adjusted excitation wave sequence until an actual signal-to-noise ratio is greater than the signal-to-noise ratio threshold; and determining, as the target excitation wave sequence, a corresponding excitation wave sequence when the actual signal-to-noise ratio is greater than the signal-to-noise ratio threshold, and according to the target excitation wave sequence, exciting the first ultrasonic transducer and enabling the second ultrasonic transducer to operate, so as to perform the metering operation. By adopting these means, it is possible to overcome the problems in the related art in which the hardware cost for the ultrasonic fluid metering apparatus executing the metering operation is increased due to the fact that high-frequency noise is reduced by additionally providing an external device, and the metering accuracy is relatively low due to the fact that since the model numbers of the ultrasonic transducers used in the ultrasonic fluid metering apparatus vary, merely adding external filters can hardly overcome residual ringing differences caused by parameter inconsistencies among the transducers. The ultrasonic transducer is excited by the excitation wave sequence including the main waves and the self-damping waves, and the parameters of the self-damping waves are adjusted according to the signal-to-noise ratio corresponding to the sampled signals, so as to determine the excitation wave sequence conforming to the current ultrasonic transducers, therefore the technical effects of significantly improving the metering accuracy without increasing any hardware cost, and overcoming residual ringing differences caused by parameter inconsistencies among different ultrasonic transducers to expand the applicable scenarios of the method are achieved.

The embodiments of the present disclosure further provide a specific implementation corresponding to the method for improving ultrasonic fluid metering accuracy:
Taking an FR 6043 ultrasonic fluid metering apparatus as an example, the FR 6043 ultrasonic fluid metering apparatus uses an ultrasonic transducer with a resonant frequency of 210 KHz. Six waves are excited in a sweeping frequency manner from 200 KHz to 230 KHz, so as to obtain a waveform as shown in Fig. 2. It can be determined that exciting with only the main waves results in leading noise and trailing noise, which adversely affects the metering accuracy of the ultrasonic fluid metering apparatus.

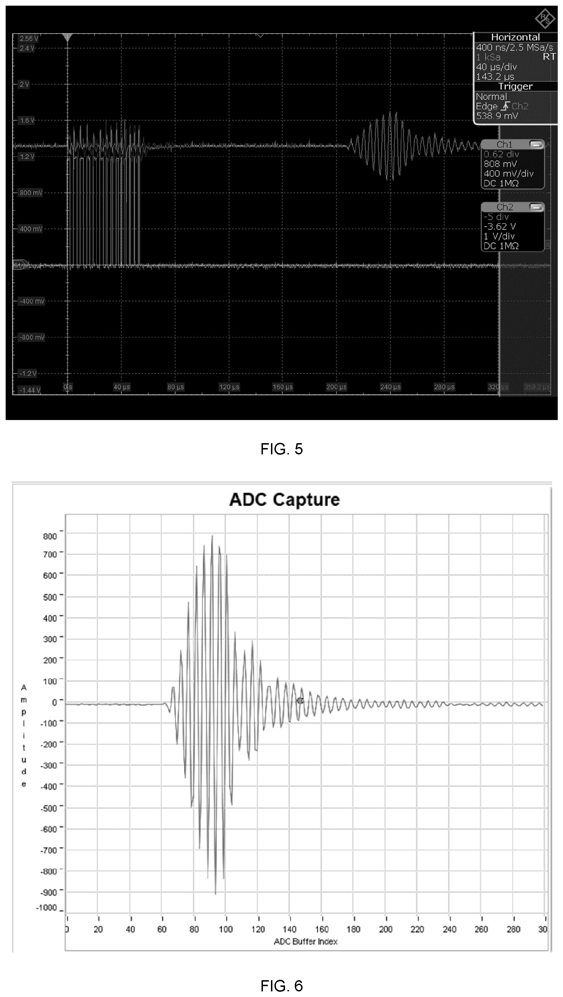

In the specific implementation, an excitation wave sequence is constructed. The number of main waves in the excitation wave sequence is set to 6, the frequency of the main waves is set to the resonant frequency 210 KHz of the ultrasonic transducer, the number of self-damping waves P is chosen to be 8. The ultrasonic transducer is excited based on the excitation wave sequence, and the schematic diagram of a waveform obtained by sampling is shown in Fig. 4. Then, in a subsequent excitation process, the first six waves in the excitation wave sequence are kept unchanged, that is, the main waves are kept fixed. Starting from the seventh wave, the occupancy times of high and low levels in the subsequent eight waves are adjusted one by one (i.e., the occupancy times of the high and low levels in the eight self-damping waves are adjusted one by one). Each of the adjustments is fed back by calculating a signal-to-noise ratio, gradually reducing the noise in the waveform signal and improving the signal-to-noise ratio (SNR). A waveform signal collected during the adjustment process is shown in Fig. 5. When the preset adjustment time has elapsed, or when the maximum snr_avg is greater than the signal-to-noise ratio threshold, an optimization and adjustment operation for the self-damping waves is exited to obtain the target excitation wave sequence. According to the target excitation wave sequence, the first ultrasonic transducer is excited and the second ultrasonic transducer is enabled to operate, so as to perform the metering operation. The schematic diagram of a waveform obtained by exciting the ultrasonic transducer based on the target excitation wave sequence is shown in Fig. 6. It can be determined that noise interference is significantly reduced, thereby helping to improve the metering accuracy.

A metering method based on the ultrasonic transducer provided in the embodiments of the present disclosure at least has the following technical effects: 1. The fixed excitation main waves ensure a peak magnitude of a valid signal, enhancing the peak value of the valid signal compared to the existing methods. 2. In the present embodiment, the noise received by the main waves is changed from a greatly attenuated natural ringing signal into a flat line, with only some minor local noise remaining. This is particularly beneficial for using a shorter flow channel for measurement, thereby reducing the volume of the ultrasonic gas meter. 3. The present method performs adaptive optimization and adjustment on the self-damping waves only according to the signal-to-noise ratio (SNR) defined by the method, without increasing any hardware cost, thereby effectively reducing the noise interference in the received signal. 4. By using the irregular excitation wave sequence obtained by the algorithm of the present method, the residual ringing differences caused by parameter inconsistencies among the transducers are overcome to the maximum extent, and the applicable scenarios of the method are expanded.

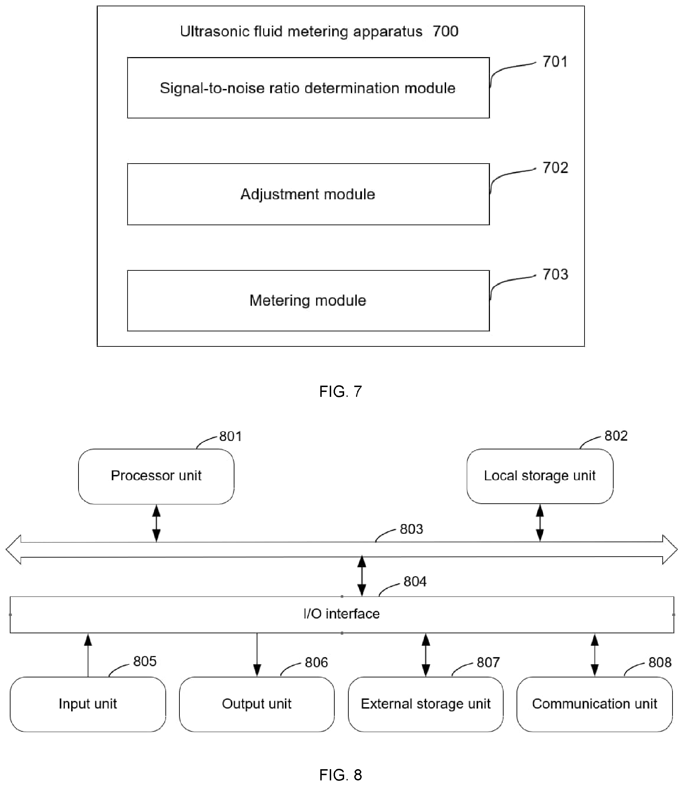

Based on the described method for improving ultrasonic fluid metering accuracy provided in the embodiments of the present disclosure, the embodiments of the present disclosure further provide an ultrasonic fluid metering apparatus. As shown in Fig. 7, the ultrasonic fluid metering apparatus 700 includes:
a signal-to-noise ratio determination module 701, configured to: using an excitation wave sequence, excite a first ultrasonic transducer and enable a second ultrasonic transducer to operate, acquire a received digital signal corresponding to the excitation wave sequence based on a preset sampling window, and calculate a signal-to-noise ratio of the received digital signal within the preset sampling window, wherein the excitation wave sequence is a combination of main waves and self-damping waves, the frequency of the main waves is consistent with the resonant frequency of the ultrasonic transducers, and the signal-to-noise ratio is the ratio of a peak-to-peak value of a received signal region to a peak-to-peak value of a noise region.

Through the described configurations, the embodiments of the present disclosure innovatively provide an apparatus for performing excitation by the excitation wave sequence including the main waves and the self-damping waves. The excitation wave sequence not only ensures the generation of a stable measurement waveform, but also helps to reduce the adverse effect of residual ringing of the ultrasonic transducer on a metering result. However, in small flow-rate measurements, even minor noise and natural ringing generate a significant effect on the measurement results. Therefore in order to improve the metering accuracy, in the embodiments of the present disclosure, the received digital signals corresponding to the excitation wave sequence are further sampled, and the ratio of the peak-to-peak value of the received signal region to the peak-to-peak value of the noise region, that is, the signal-to-noise ratio (SNR), is calculated. This facilitates the subsequent optimization and adjustment on parameters of the self-damping waves according to the signal-to-noise ratio, so as to effectively reduce the natural ringing interference of the excited transducer, thereby further improving the metering accuracy of the ultrasonic fluid metering apparatus. Consequently, it enables the ultrasonic fluid metering apparatus to overcome residual ringing differences caused by parameter inconsistencies among different ultrasonic transducers, thereby expanding the applicable scenarios of the apparatus.

In some embodiments, the ultrasonic fluid metering apparatus 700 further includes an excitation wave sequence generation module, configured to: acquire the resonant frequency of the ultrasonic transducers, use the value of the resonant frequency as a main wave frequency value corresponding to the main wave in the excitation wave sequence, and use the value of a non-resonant frequency as an initial frequency value of the self-damping waves; and generate the main waves according to the main wave frequency value, a preset duty cycle of the main waves and a preset number of the main waves, generate the self-damping waves according to the initial frequency value of the self-damping waves, an initial duty cycle of the self-damping waves and a preset number of the self-damping waves, and then combine the main waves with the self-damping waves to generate the excitation wave sequence.

Based on the described configurations, it can be determined from the described analysis that the frequency of the main waves is set to be consistent with the resonant frequency of the ultrasonic transducers, which helps to ensure the maximum transmission efficiency and intensity of the signal. Meanwhile, by using the preset duty cycle of the main waves and the preset number of the main waves, stable main waves can be generated to further reduce signal distortion. According to a specific implementation of the embodiments of the present disclosure, the preset duty cycle of the main waves may be selected as a duty cycle of 50%, so as to ensure the symmetry and stability of the waveform, thereby effectively reducing signal distortion. The selection of the preset number of the main waves depends on the required signal stability and measurement accuracy. **In** general, a greater number of the main waves may provide a more stable signal, but increases measurement time. An appropriate number of the main waves may be determined by experiments, and may also be determined in combination with the stability of the required signal and a sampling time period of the waveform corresponding to the sampling window.

In some embodiments, the self-damping waves include p fixed waves having an identical self-damping wave frequency, wherein for the p fixed waves, the p high levels thereof have the same occupancy time, and the p low levels thereof have the same occupancy time; and a frequency value of the self-damping wave lies outside an operating frequency value range of the ultrasonic transducers.

In some embodiments, the self-damping waves include p increasing waves whose self-damping wave frequencies increase progressively or p decreasing waves whose self-damping wave frequencies decrease progressively, wherein in any increasing wave, high and low levels have the same occupancy time, and the occupancy times of high levels across the p increasing waves increase progressively; and in any decreasing wave, high and low levels have the same occupancy time, and the occupancy times of high levels across the p decreasing waves decrease progressively.

An adjustment module 702, configured to determine whether the signal-to-noise ratio is greater than a signal-to-noise ratio threshold, if not, adjust occupancy times of high and low levels of the self-damping waves in the excitation wave sequence to obtain an adjusted excitation wave sequence, and perform the excitation again according to the adjusted excitation wave sequence until an actual signal-to-noise ratio is greater than the signal-to-noise ratio threshold.

By dynamically adjusting the occupancy times of the high and low levels of the self-damping waves, the natural ringing of the ultrasonic transducer may be effectively reduced, thereby reducing residual ringing and background noise. The optimized self-damping waves may better guide the oscillation frequency of the transducer to fall into the non-resonant frequency band, thereby increasing the peak value of the received signal. Moreover, by dynamically adjusting the parameters of the self-damping waves, adaptive optimization may be realized. The parameters of the self-damping waves may be dynamically adjusted under different transducers and environmental conditions, so as to achieve an optimal signal-to-noise ratio. The method exhibits good adaptability to the parameter inconsistencies among the transducers and environmental changes, enabling it to effectively handle various complex working conditions.

In some embodiments, the adjustment module 702 is further configured to: construct a level occupancy time array corresponding to the self-damping waves, wherein numerical values in the level occupancy time array sequentially represent the occupancy times of the high and low levels in p self-damping waves, and p is the preset number of the self-damping waves; and when the signal-to-noise ratio is not greater than the signal-to-noise ratio threshold, perform the following cyclic operations: determining a current numerical value to be adjusted from the level occupancy time array one by one; performing a plurality of numerical value adjustments on the current numerical value to be adjusted, calculating an actual signal-to-noise ratio corresponding to each numerical value adjustment, determining an adjustment value corresponding to a maximum signal-to-noise ratio among a plurality of actual signal-to-noise ratios, and using the adjustment value as a target value of the current numerical value to be adjusted; traversing all numerical values in the level occupancy time array; and ending the cyclic operations when the actual signal-to-noise ratio becomes greater than the signal-to-noise ratio threshold.

Through the described configurations, the level occupancy time array is constructed, the numerical values in the level occupancy time array sequentially represent the occupancy times of the high and low levels in the p self-damping waves, and then the occupancy times of the high and low levels of the self-damping waves are dynamically adjusted one by one, so that the natural ringing of the transducer can be effectively reduced, thereby reducing residual ringing and background noise. This is particularly effective in small flow-rate measurements, where the measurement accuracy is significantly improved, and zero drift is reduced. Moreover, the parameters of the self-damping waves are adaptively adjusted to adapt to different transducers and environmental conditions without incurring additional hardware costs.

In some embodiments, the adjustment module 702 is further configured to: for any adjustment on the current numerical value to be adjusted, perform a plurality of excitation operations to sample a plurality of groups of received digital signals, and calculate signal-to-noise ratio average values corresponding to the plurality of groups of received digital signals; and taking, as the adjustment value, the maximum signal-to-noise ratio among a plurality of signal-to-noise ratio average values corresponding to the plurality of numerical value adjustments.

Based on the described configurations, through a plurality of excitation operations, random errors in a single measurement can be reduced, and the stability of the signal-to-noise ratio can be improved; and by calculating the signal-to-noise ratio average values corresponding to the plurality of groups of received digital signals, the effect of the current adjustment value can be reflected more accurately. Specifically, by performing the plurality of numerical value adjustments and determining the maximum signal-to-noise ratio among the plurality of actual signal-to-noise ratio average values, an optimal adjustment value can be accurately identified. Moreover, the process of performing the plurality of numerical value adjustments and calculating the signal-to-noise ratio average values can help avoid getting trapped in a local optimum, thereby further ensuring that the adjustment value identified is a global optimum.

In some embodiments, a preset adjustment time is set, and the adjustment module 702 is further configured to: if the actual signal-to-noise ratio is greater than the signal-to-noise ratio threshold, or if the adjustment time exceeds the preset adjustment time, determine an excitation wave sequence including a current self-damping wave as the target excitation wave sequence.

In the process of optimizing and adjusting the self-damping waves, the signal-to-noise ratio (SNR) is an important indicator for assessing the measurement accuracy. By dynamically adjusting the parameters of the self-damping waves, the signal-to-noise ratio can be effectively improved, thereby improving the accuracy and reliability of the measurement. Moreover, setting the preset adjustment time can prevent the optimization process from continuing indefinitely, ensuring it is completed within a finite time period; and by imposing this time limit, computing resources can be allocated rationally, thereby avoiding resource waste caused by prolonged optimization.

A metering module 703, configured to determine, as a target excitation wave sequence, a corresponding excitation wave sequence when the actual signal-to-noise ratio is greater than the signal-to-noise ratio threshold, and according to the target excitation wave sequence, excite the first ultrasonic transducer and enable the second ultrasonic transducer to operate, so as to perform a metering operation.

The optimized self-damping waves included in the target excitation wave sequence may effectively reduce the natural ringing of the transducer, thereby reducing residual ringing and background noise, and improving the definition of the signal. A corresponding excitation wave sequence when the actual signal-to-noise ratio is greater than the signal-to-noise ratio threshold is determined as the target excitation wave sequence ensures that the excitation wave sequence used during the execution of the metering operation is optimal, thereby improving the reliability of the measurement; and by optimizing the signal-to-noise ratio, random errors and system errors in the measurement are reduced, thereby improving the accuracy of the measurement result.

In the ultrasonic fluid metering apparatus provided in the embodiments of the present disclosure, the signal-to-noise ratio determination module is configured to: using the excitation wave sequence, excite the first ultrasonic transducer and enable the second ultrasonic transducer to operate, acquire the received digital signal corresponding to the excitation wave sequence based on the preset sampling window, and calculate the signal-to-noise ratio of the received digital signal within the preset sampling window, wherein the excitation wave sequence is the combination of the main waves and the self-damping waves, the frequency of the main waves is consistent with the resonant frequency of the ultrasonic transducers, and the signal-to-noise ratio is the ratio of the peak-to-peak value of the received signal region to the peak-to-peak value of the noise region; the adjustment module is configured to determine whether the signal-to-noise ratio is greater than the signal-to-noise ratio threshold, if not, adjust the occupancy times of the high and low levels of the self-damping waves in the excitation wave sequence to obtain the adjusted excitation wave sequence, and perform the excitation again according to the adjusted excitation wave sequence until an actual signal-to-noise ratio is greater than the signal-to-noise ratio threshold; and the metering module is configured to determine, as the target excitation wave sequence, a corresponding excitation wave sequence when the actual signal-to-noise ratio is greater than the signal-to-noise ratio threshold, and according to the target excitation wave sequence, excite the first ultrasonic transducer and enable the second ultrasonic transducer to operate, so as to execute the metering operation. The ultrasonic transducer is excited by the excitation wave sequence including the main waves and the self-damping waves, and the parameters of the self-damping waves are adjusted according to the signal-to-noise ratio corresponding to the sampled signals, so that the excitation wave sequence conforming to the current ultrasonic transducer is determined. Therefore, the technical effects of significantly improving the metering accuracy without increasing any hardware cost, and overcoming residual ringing differences caused by parameter inconsistencies among different ultrasonic transducers to expand the applicable scenarios of the apparatus are achieved.

The embodiments of the present disclosure further provide a non-transitory machine-readable medium having stored thereon a computer program, wherein the computer program, when executed by a processor of a computer, is configured to cause the computer to perform the method in the embodiments of the present disclosure.

The embodiments of the present disclosure further provide a computer program product, including a computer program, wherein the computer program, when executed by a processor of a computer, is configured to cause the computer to perform the method in the embodiments of the present disclosure. The computer program product should be understood as a software product for mainly implementing the described method in the present disclosure by means of the computer program.

The embodiments of the present disclosure further provide an electronic device, including: at least one processor, and a memory storing a computer program capable of being executed by the at least one processor, wherein the computer program includes instructions, and the instructions, when executed by the processor, cause the processor to execute any method for improving ultrasonic fluid metering accuracy described above.

Referring to Fig. 8, the structural block diagram of an electronic device capable of serving as a server or a client in the embodiments of the present disclosure will now be described, and it is an example of a hardware device that may be applied to various aspects of the present disclosure. The electronic device is intended to represent various forms of digital-electronic computer devices, such as laptop computers, desktop computers, workstations, personal digital assistants, servers, blade servers, mainframe computers, and other suitable computers. The electronic device may also represent various forms of mobile apparatuses, such as personal digital processing, cellular telephones, smart phones, wearable devices, and other similar computing apparatuses. Components shown herein, connections and relationships thereof, and functions thereof are used as examples only and are not intended to limit the implementations of the present disclosure described and/or claimed herein.

As shown in Fig. 8, the electronic device includes a processor unit 801, and the processor unit 801 may be a variety of universal and/or dedicated processing components having processing and computing capabilities. Some examples of the processor unit 801 include, but are not limited to, an MCU, a CPU, a graphics processing unit (GPU), various dedicated artificial intelligence (AI) computing units, various computing units for running a machine learning model algorithm, a digital signal processor (DSP), and any suitable processors, controllers, microcontrollers, etc. The processor unit 801 is configured to execute various methods and processing described above. For example, in some embodiments, the method embodiments of the present disclosure may be implemented as computer programs, which are tangibly embodied in a machine-readable medium, for example, an external storage unit 807. In some embodiments, some or all of the computer programs may be loaded into and/or installed on the electronic device by a local storage unit 802 and/or a communication unit 808. In some embodiments, the processor unit 801 may be configured to execute the described method in any other suitable manners (e.g., by means of firmware).

Specifically, the processor unit 801 may execute various suitable actions and processing according to a computer program stored in the local storage unit 802 (may be an ROM storage unit or other devices having storage functions) or a computer program loaded from an external storage unit 807 into the local storage unit 802 (e.g., a random access memory (RAM)). In the local storage unit 802, various programs and data required by the operations of the electronic device may also be stored. The processor unit 801 and the local storage unit 802 are connected to each other by a bus 803. An input/output (I/O) interface 804 is also connected to the bus 803.

A plurality of components in the electronic device are connected to the I/O interface 804, the components including: an input unit 805, an output unit 806, the external storage unit 807 and the communication unit 808. The input unit 805 may be any type of device capable of inputting information to the electronic device; the input unit 805 may receive input digital or character information, and generate a key signal input related to user settings and/or function control of the electronic device; the output unit 806 may be any type of device capable of presenting information, and may include, but is not limited to, a display, a loudspeaker, a video/audio output terminal, a vibrator, and/or a printer; the external storage unit 807 may include, but is not limited to, a magnetic disk, and an optical disk; and the communication unit 808 allows the electronic device to exchange information/data with other devices via computer networks such as the Internet and/or various telecommunication networks, and may include, but is not limited to, a modem, a network card, an infrared communication device and/or a wireless communication transceiver, for example, a Bluetooth device, a Wi-Fi device, a WiMax device, a cellular communication device and/or an analogue.

Computer programs for implementing the method in the embodiments of the present disclosure may be compiled in one or more programming languages or combinations thereof. These computer programs may be provided to a processor or controller of a general-purpose computer, a special-purpose computer or other programmable data processing apparatuses, such that the computer programs, when executed by the processor or controller, cause functions/operations specified in the flowchart and/or block diagram to be implemented. The computer programs may be executed entirely on a machine, executed partly on the machine, executed partly on the machine as a stand-alone software package and executed partly on a remote machine, or executed entirely on the remote machine or a server.

In the context of the embodiments of the present disclosure, the machine-readable medium may be a tangible medium, which may include or store a program for use by or in combination with an instruction execution system, apparatus or device. The machine-readable medium may be a machine-readable signal medium or a machine-readable storage medium. The machine-readable signal medium may include, but is not limited to, electronic, magnetic, optical, electromagnetic, infrared, or semiconductor systems, apparatuses or devices, or any suitable combinations thereof. More specific examples of the machine-readable storage medium would include an electrical connection based on one or more wires, a portable computer disk, a hard disk, a random access memory (RAM), a read-only memory (ROM), an erasable programmable read-only memory (EPROM or a flash memory), an optical fiber, a compact disc-read-only memory (CD-ROM), an optical storage device, a magnetic storage device, or any suitable combinations thereof.

It should be noted that the term "include" and variations thereof used in the embodiments of the present disclosure are open inclusions, i.e., "including, but not limited to". The term "based on" is "based, at least in part, on". The term "one embodiment" means "at least one embodiment"; the term "another embodiment" means "at least one additional embodiment"; and the term "some embodiments" means "at least some embodiments". The modifications of "one" and "a plurality" mentioned in the embodiments of the present disclosure are illustrative rather than restrictive, and those skilled in the art should understand that unless the context clearly indicates otherwise, it should be understood as "one or more".

The information and data (including, but not limited to, data configured to be analyzed, data configured to be stored, data configured to be displayed, or the like) involved in the embodiments of the present disclosure are all information and data authorized by a user or fully authorized by each party, and the collection, usage and processing of related data need to comply with relevant laws and regulations and standards of relevant countries and regions, and a corresponding operation portal is provided for the user to select authorization or rejection.

The steps disclosed in the method implementations provided in the embodiments of the present disclosure may be executed in a different order, and/or executed in parallel. In addition, the method implementations may include additional steps and/or omit the execution of illustrated steps. The protection scope of the present disclosure is not limited in this aspect.

The term "embodiment" in the present description means that particular features, structures or characteristics described in combination with the embodiment may be included in at least one embodiment of the present disclosure. The appearances of the phrase in various places in the description do not necessarily mean the same embodiment, nor are meant to be mutually exclusive to other embodiments to have independence or selectivity. The various embodiments in the present description are described in a related manner, and for the same and similar parts between the embodiments, reference is made to each other. In particular, apparatus, device and system embodiments are basically similar to the method embodiments, and thus are described relatively simple, and reference may be made to the description of the method embodiments for related parts.

The described embodiments only express several implementations of the present disclosure, and the description thereof is relatively specific and detailed, but cannot be understood as limitations to the protection scope. It should be noted that for those ordinary skilled in the art, several modifications and improvements may also be made without departing from the concept of the present disclosure, and these modifications and improvements all fall within the protection scope of the present disclosure. Therefore, the protection scope of the present disclosure should be subject to the appended claims.

## Claims

1. A method for improving ultrasonic fluid metering accuracy, wherein the method comprises:
using an excitation wave sequence to excite a first ultrasonic transducer and to enable a second ultrasonic transducer to operate, acquiring a received digital signal corresponding to the excitation wave sequence based on a preset sampling window, and calculating a signal-to-noise ratio of the received digital signal within the preset sampling window, wherein the excitation wave sequence is a combination of main waves and self-damping waves, a frequency of the main waves is consistent with a resonant frequency of the ultrasonic transducers, and the signal-to-noise ratio is a ratio of a peak-to-peak value of a received signal region to a peak-to-peak value of a noise region;
determining whether the signal-to-noise ratio is greater than a signal-to-noise ratio threshold, if not, adjusting occupancy times of high and low levels of the self-damping waves in the excitation wave sequence to obtain an adjusted excitation wave sequence, and performing excitation again according to the adjusted excitation wave sequence until an actual signal-to-noise ratio is greater than the signal-to-noise ratio threshold; and
determining, as a target excitation wave sequence, a corresponding excitation wave sequence when the actual signal-to-noise ratio is greater than the signal-to-noise ratio threshold, and according to the target excitation wave sequence, exciting the first ultrasonic transducer and enabling the second ultrasonic transducer to operate, so as to perform a metering operation.

2. The method according to claim 1, wherein the method further comprises a step of generating the excitation wave sequence:
acquiring the resonant frequency of the ultrasonic transducers, using a value of the resonant frequency as a main wave frequency value corresponding to the main waves in the excitation wave sequence, and using a value of a non-resonant frequency as an initial frequency value of the self-damping wave; and
generating the main waves according to the main wave frequency value, a preset duty cycle of the main waves and a preset number of the main waves, generating the self-damping waves according to the initial frequency value of the self-damping waves, an initial duty cycle of the self-damping waves and a preset number of the self-damping waves, and then combining the main waves with the self-damping waves to generate the excitation wave sequence.

3. The method according to claim 1, wherein the step of adjusting the occupancy times of the high and low levels of the self-damping waves in the excitation wave sequence to obtain the adjusted excitation wave sequence, and performing the excitation again according to the adjusted excitation wave sequence until the actual signal-to-noise ratio is greater than the signal-to-noise ratio threshold comprises:
constructing a level occupancy time array corresponding to the self-damping waves, wherein numerical values in the level occupancy time array sequentially represent occupancy times of the high and low levels in p self-damping waves, and p is a preset number of the self-damping waves; and
when the signal-to-noise ratio is not greater than the signal-to-noise ratio threshold, performing the following cyclic operations: determining a current numerical value to be adjusted from the level occupancy time array one by one; performing a plurality of numerical value adjustments on the current numerical value to be adjusted, calculating an actual signal-to-noise ratio corresponding to each numerical value adjustment, determining an adjustment value corresponding to a maximum signal-to-noise ratio among a plurality of actual signal-to-noise ratios, and using the adjustment value as a target value of the current numerical value to be adjusted; traversing all numerical values in the level occupancy time array; and ending the cyclic operations when the actual signal-to-noise ratio becomes greater than the signal-to-noise ratio threshold.

4. The method according to claim 3, wherein the step of performing the plurality of numerical value adjustments on the current numerical value to be adjusted, calculating the actual signal-to-noise ratio corresponding to each numerical value adjustment, and determining the adjustment value corresponding to the maximum signal-to-noise ratio among the plurality of actual signal-to-noise ratios further comprises:
for any adjustment on the current numerical value to be adjusted, performing a plurality of excitation operations to sample a plurality of groups of received digital signals, and calculating signal-to-noise ratio average values corresponding to the plurality of groups of received digital signals; and
taking, as the adjustment value, the maximum signal-to-noise ratio among the plurality of signal-to-noise ratio average values corresponding to the plurality of numerical value adjustments.

5. The method according to claim 1, wherein a preset adjustment time is set, and the method further comprises:
if the actual signal-to-noise ratio is greater than the signal-to-noise ratio threshold, or if an adjustment time exceeds the preset adjustment time, determining an excitation wave sequence comprising a current self-damping wave as the target excitation wave sequence.

6. The method according to claim 1, wherein the self-damping waves comprise p fixed waves having an identical self-damping wave frequency, wherein for the p fixed waves, the p high levels thereof have the same occupancy time, and the p low levels thereof have the same occupancy time; and a frequency value of the self-damping waves lies outside an operating frequency value range of the ultrasonic transducers.

7. The method according to claim 1, wherein the self-damping waves comprise p increasing waves whose self-damping wave frequencies increase progressively or p decreasing waves whose self-damping wave frequencies decrease progressively, wherein
in any increasing wave, high and low levels have the same occupancy time, and occupancy times of high levels across p increasing waves increase progressively; and
in any decreasing wave, high and low levels have the same occupancy time, and occupancy times of high levels across p decreasing waves decrease progressively.

8. An ultrasonic fluid metering apparatus, wherein the apparatus comprises:
a signal-to-noise ratio determination module, configured to: use an excitation wave sequence to excite a first ultrasonic transducer and to enable a second ultrasonic transducer to operate, acquire a received digital signal corresponding to the excitation wave sequence based on a preset sampling window, and calculate a signal-to-noise ratio of the received digital signal within the preset sampling window, wherein the excitation wave sequence is a combination of main waves and self-damping waves, a frequency of the main waves is consistent with a resonant frequency of the ultrasonic transducers, and the signal-to-noise ratio is a ratio of a peak-to-peak value of a received signal region to a peak-to-peak value of a noise region;
an adjustment module, configured to determine whether the signal-to-noise ratio is greater than a signal-to-noise ratio threshold, if not, adjust occupancy times of high and low levels of the self-damping waves in the excitation wave sequence to obtain an adjusted excitation wave sequence, and perform excitation again according to the adjusted excitation wave sequence until an actual signal-to-noise ratio is greater than the signal-to-noise ratio threshold; and
a metering module, configured to determine, as a target excitation wave sequence, a corresponding excitation wave sequence when the actual signal-to-noise ratio is greater than the signal-to-noise ratio threshold, and according to the target excitation wave sequence, excite the first ultrasonic transducer and enable the second ultrasonic transducer to operate, so as to perform a metering operation.

9. An electronic device, comprising: a processor, and a memory for storing a program, wherein the program comprises instructions, and the instructions, when executed by the processor, cause the processor to perform the method according to any of claims 1-7.

10. A non-transitory machine-readable medium having stored thereon computer instructions, wherein the computer instructions are configured to cause a computer to perform the method according to any of claims 1-7.
